Europäisches Patentamt

European Patent Office

Office européen des brevets

(11) Publication number: **0 346 533 B1**

# EUROPEAN PATENT SPECIFICATION

(45) Date of publication of patent specification: **12.08.92**

(51) Int. Cl.5: **C09D 167/02**, C09D 163/00, C09D 5/02

(21) Application number: **88305380.3**

(22) Date of filing: **13.06.88**

(54) **Aqueous dispersion type coating material.**

(43) Date of publication of application:
**20.12.89 Bulletin 89/51**

(45) Publication of the grant of the patent:
**12.08.92 Bulletin 92/33**

(84) Designated Contracting States:
**DE GB**

(56) References cited:
**BE-A- 777 169
US-A- 4 304 804**

**PATENT ABSTRACTS, vol. 11, no. 353
(C-457)[2800], 18th November 1987; & JP-A-62
127 359 (NIPPON OIL & FATS CO., LTD)
09-06-1987**

**PATENT ABSTRACTS OF JAPAN, vol. 11, no.
133 (C-418)[2580], 25th April 1987; & JP-A-61
268 764 (TOYO INK MFG CO., LTD) 28-11-1986**

(73) Proprietor: **NIPPON OIL AND FATS COMPANY,
LIMITED
10-1, Yuraku-cho 1-chome
Chiyoda-ku Tokyo 100(JP)**

(72) Inventor: **Taniguchi, Hitoshi
1292 Yamazaki
Kamakura-shi Kanagawa(JP)**
Inventor: **Ishidoya, Masahiro
3654-2, Maiokacho Totsuka-ku
Yokohama-shi Kanagawa(JP)**
Inventor: **Nakashima, Ken
6-23, Mondo-okadacho
Nishinomiya-shi Hyogo(JP)**
Inventor: **Ogawa, Hisao
19-69 Ikego 2-chome
Zushi-shi Kanagawa(JP)**

(74) Representative: **Perry, Robert Edward et al
GILL JENNINGS & EVERY 53-64 Chancery
Lane
London WC2A 1HN(GB)**

**Description**

The present invention relates to an aqueous dispersion type coating material, and more particularly, relates to an aqueous dispersion type coating material having an excellent corrosion resistance, storage stability and finished appearance and furthermore a coating adequacy to a wide field of coating applications.

In recent years, even in the general industrial coating fields not employing the electro-deposition coating system from the viewpoint of environmental preservation and resource saving, it has become necessary to develop an aqueous coating material capable of providing a coated film excellent in corrosion resistance without using such harmful heavy metal system corrosion resistant pigments as chrome, lead and the like. Especially, strongly desired is the enhancement of corrosion resistance of a coated film to be formed on the so-called untreated iron surfaces which have not been chemically treated as being represented by zinc phosphate or iron phosphate coated irons.

To cope up with this kind of demand, the study has conventionally been made for achieving the improvement by intensifying the performance of resin itself without relying upon the corrosion resistant pigments, and the development of aqueous coating materials mainly containing such resins excellent in corrosion resistance as maleinized polybutadiene resin, phenol-denatured water soluble resin and epoxy-denatured resins which have been esterificated by ring-opening.

These types of aqueous coating materials are superior to the aqueous coating materials containing simple polyester resin and acrylic system resin which are not denatured, but could not satisfy such a problematic point that the demands against a high level of corrosion resistance performance in recent days.

Japanese Patent Application Lay-Open No.127359/1987 discloses that an excellent corrosion resistance is provided by the aqueous dispersion type coating material mainly consisting of the aqueous dispersion which can be obtained by compounding a special aqueous epoxy resin mainly consist of bisphenol type epoxy resin with a solid epoxy resin having an excellent corrosion resistance at ordinary temperature.

The aqueous dispersion type coating material proposed in the aforementioned patent application is higher in structural viscosity in comparison with conventional water soluble coating materials, and for this reason, owns such a merit that a thick film coating is avaiable at the time of atomization coating by use of an air spray or an airless spray against flat areas. However this coating material, when it should be added with the organic solvents being adopted for controlling the structural viscosity of general aqueous coating materials, not only will bring about the aggregation among dispersed particles but also deteriorate in the storage stability of coating material and can not control the structural viscosity through the addition of organic solvents. If the coating material should be applied without controlling the structural viscosity, liquid puddles and pinhole are caused to appear and degrade the appearance in the case of the immersion coating or flow coating against vertical areas, which are widely used in industrial coatings, and therefore there were such problematic points that the coating workablility gets worse and the application to these types of coating fields is difficult.

Summary of the Invention

An object of the present invention is providing an aqueous dispersion type coating material, for solving the aforementioned problematic points, that owns a corrosion resistance, storage stability and finished appearance, is able to control its structural viscosity through the addition of organic solvents, moreover can obtain the excellent finished appearance even by immersion coating, flow coating, etc. on vertical faces with a favorable coating workability and can be applied to a wide range of coating fields.

An aqueous dispersion type coating material of the present invention comprises as a film forming constituent an aqueous dispersion which is obtained by emulsifing a resin reactant into an aqueous medium under the presence of base substance, said resin reactant having the acid value at 10 to 30 and obtained by addition polymerization of the following resin "A" and "B" at the ratio from 80/20 to 20/80 by weight.

Resin "A" : A water soluble epoxy-denatured alkyd resin with acid value at 20 to 50, hydroxyl value at 100 to 300 and number average molecular weight at 1,000 to 10,000 containing 30 to 60 weight % of bisphenyl type epoxy resin in the main chain and 10 to 35 weight % of alkyl group with number of carbons at 8 to 30 in the side chain.

Resin "B" : An epoxy resin with molecular weight at 2,000 to 30,000 and epoxy equivalent at 1,500 or more and in solid state at ordinary temperature.

Detailed Description of the Invention

In this invention, because the condensate of resin "A" and resin "B" in which a part of oxylane ring or hydroxyl group of resin "B" is added and polymerized in esterification to a part of carboxyl group of resin "A" has a hydrophilic property, the condensate itself not only gets dispersed into an aqueous medium but also disperses the non-reacted resin "B" inside the resin reactant into the aqueous mediun in translucent colloidal emulsion region by dint of its surfactant action. The aqueous dispersion is extremely stable, in comparison with the conventional resin dispersion, against the addition of organic solvents. An aqueous dispersion type coating material containing as a film forming constituent the translucent aqueous dispersion obtained by the aforesaid reactant has an excellent corrosion resistance equal to an aqueous dispersion type coating material containing as a film forming constituent a resin dispersion obtained in the case that the resins "A" and "B" have not be condensed at all, and on the other hand, can control the structural viscosity of the coating material by the addition of organic solvents, therefore an excellent finished appearance can be obtained also by the immersion coating and flow coating on vertical areas, and moreover, the storage stability is favorable even after the organic solvents have been added to it.

The resin "A" in the present invention is a water soluble epoxy-denatured alkyd resin with acid value at 20 to 50 or preferably at 25 to 40, hydroxyl value at 100 to 300 or preferably at 100 to 200 and number average molecular weight at 1,000 to 10,000 or preferably at 1,000 to 5,000 containing 30 to 60 weight % or preferably 30 to 50 weight % of bisphenol type epoxy resin in the main chain and moreover having 10 to 35 weight % or preferably 10 to 30 weight % of alkyl group with number of carbons at 8 to 30 or preferably at 10 to 20 in the side chain, which provides a perfect compatibility with resin "B" which is a high molecular weight epoxy resin. This resin "A" is converted into an added/polymerized substance having a hydrophilic property by adding and polymerizing at least a part of water insoluble resin "B" through esterification, which disperses the resin "B" into an aqueous medium at a colloidal emulsion region and forms a highly corrosion-resistant film.

As resin "A", a water soluble epoxy-denatured alkyd resin can be used that can be synthesized by a publicly known method using commercially available bisphenol type epoxy resin and an usual polyester raw material.

As a bisphenol type epoxy resin constitutent of the raw material, a liquid state epoxy resin with low molecular weight is preferable because denaturation can be controlled easily, and for example such substances as Epikote 828, Epikote 834 (in trademarks, manufactured by Shell Chemical Corp.), Epiclon 840, Epiclon 850 (in trademarks, manufactured by Dainippon Ink Chemicals Co., Ltd.), Araldite GY250, Araldite GY260 (in trademarks, manufactured by Ciba-Geigy Co., Ltd.) and the like can be enumerated.

As the aforementioned polyester raw materials, there are the raw materials of polyol constituent, polyacid constituent, and alkyl group constituent with number of carbons from 8 to 30 to be combined to the side chain. As the polyol constituent, such substances can be enumerated, for example, as ethylene glycol, propylene glycol, diethylene glycol, butylene glycol, neopentyl glycol, 1,5-pentanediol, hexanediol, 2,2-dimethylpentane-1,3-diol, hydrogenated bisphenol A, hexylene glycol, glycerol, trimethyrol ethane, trimethyrol propane, 1,2,6-hexanetriol, trimethyrol cyclohexane, pentaerythritol, sorbitol, diglycerol, dipentaerythritol, etc.

Further, as the polyacid constituent, for example, such substances can be enumerated as phthalic anhydride, isophthalic acid, terephthalic acid, tetrahydro phthalic anhydride, hexahydro phthalic anhydride, maleic anhydride, fumaric acid, succinic acid, glutaric acid, adipic acid, trimethyl adipic acid, sebacic acid, dodecan dicarbonic acid, dimethyrol propionic acid, trimellitic anhydride, pyromellitic anhydride, butane tetracarboxylic acid, etc.

As the alkyl group raw materials with number of carbons at 8 to 30 to be combined to the side chain, such substances are available, for example, as fatty acid, monohydric alcohol, fattic ester, aliphatic epoxy compounds, etc. As fatty acids, such substances can be enumerated, for example, as natural fatty acids that can be obtained from soy beans oil, coconut oil, safflower oil, cotton seed oil, rice oil, castor oil, castor oil anhydride, hydrogenated castor oil , tung oil, linseed oil, tall oil and the like as well as a variety of synthesized fatty acids with C8 through C30. Further, as monovalent alcohols, such substances can be enumerated, for exmple, as lauryl alcohol, myristil alcohol, cetyl alcohol, stearyl alcohol and oleyl alcohol that can be obtained by reduction of the aforementioned natural fatty acids, and synthetic alcohols with C8 through C20, and moreover the alkyl-substituted hydrogenated phenols with C2 through C24.

As the fattic esters, such substances can be enumerated, as the glycidyl ester of fatty acids with C5 through C25, and as the aliphatic epoxy compounds, such substances can be enumerated, as the aliphatic epoxy compounds obtained by oxidation of $\alpha$-olefin with C8 to C30.

Why resin "A" is limited to the aforesaid range in the present invention attributes to the following reason. In the case that the bisphenol type epoxy resin contained in the main chain of resin "A" is less than 30 weight %, the compatibility with resin "B" gets worse, and for this reason, not only a translucent resin dispersion of colloidal emulsion region can not be obtained but the corrosion resistance of the coated film may get deteriorated. Moreover, if its content exceeds 60 weight %, the flexibility of the coated film will be lost.

If the carbon number of the alkyl group in the side chain of resin "A" is less than 8 or the content of the alkyl group is less than 10 weight %, it is difficult to obtain a stable and uniform resin dispersion because of the insufficient emulsification force at the time of emulsification, and if this substance is used as a coating material, its surface tension will be too high and for this reason, such coated film defects as insufficient wetting and pinhole are likely to happen. If the carbon number of the alkyl group exceeds than 30 or the content of alkyl group exceeds 35 weight %, the compatibility with resin "B" is lost and the emulsification becomes difficult, which is not favorable.

In the event that the acid value of resin "A" is less than 20, the hydrophilic property of the resin reactant becomes insufficient because of the decrease of carboxyl group due to the esterification with resin "B", and the resin "B" can not be maintained stably in dispersed state within the aqueous mediun. If the acid value exceeds the level of 50, not only the emulsification force can not be expected but the corrosion resistance of the coated film falls down, which is not favorable.

The hydroxyl value of resin "A" is important for the solubility of resin "A" to water, adjustment of the compatibility with resin "B" and crosslinking points in the case of using such hardening agents as amino resins or blocked isocyanate compounds. If the hydroxyl value is less than 100, not only a stable aqueous dispersion can not be obtained because of the shortage in water solubility and the compatibility with resin "B", but the crosslinking points becomes too fewer in the case of using the hardening agents. If the hydroxyl value exceeds the level of 300, a bad influence is given to the corrosion resistance and water resisting property of the coated film.

In the case that the number average molecular weight of resin "A" is less than 1,000, the protective colloidal emulsion stability of the non-reacted resin "B" becomes inferior, thereby it becomes difficult to obtain a translucent aqueous dispersion and such durabilities as corrosion resistance, water resisting property and weatherability of the coated film may get deteriorated. If the number average molecular weight exceeds the level of 10,000, the viscosity of the resin reactant becomes conspicuously high which requires a great deal of organic solvents for facilitating its handling, thereby non-volatile matters of the aqueous dispersion and the coating material decrease and fluidity/smoothness of the coated film during heating and drying is unfavorably aggravated.

The resin "B" in the present invention is the epoxy resin which is solid in ordinary temperature, whose fusing point should preferably be from 50 to 150°C, whose molecular weight is from 2,000 to 30,000 or should preferably be from 2,000 to 10,000 and whose epoxy equivalent is higher than 1,500. At least a part of this resin "B" forms an addition polymerization substance having a hydrophilic property through the reaction with resin "A", which desperses into an aqueous medium and emulsifies the non-reacted resin "B" as finely dispersing particles into the aqueous medium, so that the coated film has an excellent corrosion resistance.

As resin "B", so long as the aforesaid range can be satisfied, commercially available epoxy resins of solid state at ordinary temperature can be used. Such substances can be enumerated as Epikote 1007, Epikote 1009, Epikote 1100L (in trademarks, manufactured by Shell Chemical Corp.), Araldite 7097, Araldite 6097, Araldite 6099 (in tradmarks, manufactured by Ciba-Geigy Co., Ltd.), Epiclon 7055, Epiclon 9055 (in trademarks, manufactured by Dainippon Ink and Chemicals Co., Ltd.). Epotohto YD 017, Epotohto YD 019 and Epotohto YD 020 (in trademarks, manufactured by Tohto Kasei Co., Ltd.). Further, epoxy compounds and epoxy derivatives which can be easily produced from the abovementioned resins can be used such as fattic ester type epoxy resins, polyol type epoxy resins and polyglycol type epoxy resins.

Why resin "B" is limited to the aforementioned range is attributable to the following reason. Namely, if resin "B" is not a solid state at ordinary temperature, particles of the obtained aqueous dispersion tend to cause a aggregation and a stable aqueous dispersion is not obtainable. If the molecular weight of resin "B" is less than 2,000, not only the resin could not become an unswelled stable aqueous dispersion but such durabilities as corrosion resistance, water resisting property and alkalinity resistance of the coated film may get deteriorated. The viscosity of the resin reactant with resin "A" becomes conspicuously high if the molecular weight exceeds the level of 30,000, which requires a great deal of organic solvents, invites the fall in non-volatile matter of the aqueous dispersion and an objective coating material, and deteriorates the fluidity smoothness of the coated film during heating and drying.

If the epoxy equivalent of resin "B" is less than 1,500, excessive ring-opening esterification of oxylane rings happens in the esterification with resin "A", bringing about a conspicuous increase in viscosity or a geletion and damaging the storage stability of the coating material.

The aqueous dispersion type coating material according to the present invention contains as a film forming constituent an aqueous dispersion which is obtained by emulsifying into an aqueous medium the resin reactant with acid value from 10 to 30 obtained by addition polymerization of the resin "A" and resin "B" at the ratio from 80/20 to 20/80 by weight.

When the resin "A" and resin "B" are reacted to each other at the aforesaid ratio, the addition polymerization is caused to happen by ring-opening esterification between at least a part of carboxyl group of resin "A" and an oxylane ring of at least a part of resin "B" or by esterification with a hydroxyl group. The addition polymerization substance not only is dispersed into an aqueous medium because of the hydrophilic property but also disperses the non-reacted water insoluble resin "B" in the colloidal emulsion region by dint of its interfacial activity to form a translucent aqueous dispersion. The esterification between resin "A" and resin "B" is preferably be conducted from 120 to 160°C so as to facilitate the reaction control, and an amine catalyst may be used in order to promote the ring-opening esterification with the oxylane ring. In order to facilitate agitation, an hydrophilic organic solvent possessing no active hydroxyl group may be used, and as this type of hydrophilic organic solvents such as methyl propylene glycol, propyl propylene glycol, diethylene glycol dimethyl ether, diethylene glycol dimethyl ether, diethylene glycol diethyl ether, triethylene glycol dimethyl ether, etc.

The end point of the esterification is at the point of time when the acid value of resin reactant falls under the aforesaid range, and preferably when the range of esterification of carboxyl groups in resin "A" remains within 10 to 50%. Actually, it is desirous to emulsifiy the resin reactant into water in the reaction process and to determine the end point when an aqueous dispersion of translucent colloidal emulsion region is obtained.

Why the ratio between resin "A" and resin "B" as well as the acid value of the resin reactant is limited to the aforementioned range in the present invention is attributable to the follwing reason.

Namely, in the case that the proportion of resin "A" is less than 20% of total weight (internal division calculation) of resins "A" and "B", the aqueous dispersion of translucent colloidal emulsion region can not be obtained and for this reason the smooth finished appearance and storage stability become worse. If the volume of resin "A" exceeds the level of 80%, the corrosion resistance of the objective coating material falls down. On the other hand, if the acid value of the resin reactant is less than 10, the water solubility of the resin reactant becomes insufficient and translucent aqueous dispersion of colloidal emulsion region can not be obtained. If the acid value exceeds the level of 30, the corrosion resistance of the coated film falls down.

The concentration of the resin reactant in the aqueous dispersion type coating material may preferably be around 30 to 60 weight % in the total weight.

The aqueous dispersion type coating material in this invention contains as a film forming constituent an aqueous dispersion obtained by making contacted with an aqueous medium under the presence of a base substance the mixture of the aforesaid resin reactant and other constituents added as necessary. The aqueous dispersion may preferably be produced by the following mehtod.

First, the resin reactant is neutralized by such a base substance used for general aqueous coating materials as ammonia, triethyl amine, dimethyl ethanol amine, diethyl methanol amine, diethanol amine, methyl diethanol amine, 2-amino-2-methyl propanol, etc. The neutralization rate of the carboxyl groups in the resin reactant by the base substance may preferably be within the range of 0.2 to 1 equivalent. In the case that the rate is less than 0.2 equivalent, the dispersed particales can not be emulsified stably, while if the ratio exceeds the level of 1 equivalent, the viscosity of aqueous dispersion increases and the fall in non-volatile matter of the objective coating material is invited.

The resin reactant which has been neutralized with the base substance is then brought into contact with an aqueous mediun to disperse and to emulsify. Here, the aqueous medium means water or the solution which an organic solvent or other substances have been mexed with water. As the emulsification method, any of the method of adding the aqueous medium continuously to the resin reactant and the method of adding the resin reactant continously to the aqueous medium can be accepted. At this time, for the purpose of facilitating the dispersion into aqueous medium, it is acceptable to heat up the resin reactant and water in advance, and for the same purpose organic solvents usually used for aqueous coating materials may be used. Total amount of the organic solvents used in this step and in the aforementioned esterification is desirous to be 100 weight % or below against the weight of resin reactant for the sake of not damaging the characteristics as an aqueous coating material. The amount of water to be made contacted with the resin reactant is preferably in the range from 40 to 200 weight % against the weight of resin reactant. In the case that a water insoluble hardening agent is to be used for the final coating material, the hardening agent may be mixed previously into the resin reactant and may be dispersed into the aqueous medium during this emulsification process. For the agitation and mixing in the emulsification process, any agitator used for coating material can be used.

Since the translucent aqueous dispersion obtained through the emulsification contains epoxy groups and carboxyl groups, the dispersion can form a film by baking without a hardning agent. However it is desirous to add a hardening agent to the dispersion in order to prepare a heat curing type or a forced drying type coating material. As the hardening agent, one or more compounds selected from amino resins and blocked isocyanates are useful. As amino resin, such substance are available as the condensate of co-condensates of formaldehyde and area, melamine or benzoguanamine. Further, the etherificated substances by use of alcohol with C4 or less of these condensates can also be used. As the blocked isocyanates, there may be useful such polyisocyanate compounds having two or more isocyanate group within a molecule blocked with a block agent, as ethylene diisocyanate, propylene diisocyanate, tetraethylene diisocyanate, hexamethylene diisocyanate, decamethylene diisocyanate, m-phenylene diisocyanate, p-phenylene diisocyanate, 2,4-tolylene diisocyanate, 2,6-tolylene diisocyanate, 1,5-naphthyl diisocyanate, $4,4',4''$-triphenylmethane triisocyanate, $4,4'$-diphenylmethane diisocyanate, $3,3'$-dimethyl-$4,4'$-diphenyl diisocyanate, m-xyrilene diisocyanate, p-xylylene diisocyanate, isohorone diisocyanate, trimethyl-hexamethylene diisocyanate, etc. As the aforesaid block agents, such substances are available, for example as phenolic compounds like phenol and cresol, alcohols like methanol, benzyl alcohol and ethylene glycol monoethyl ether, active methylene compounds like aceto acetic acid methyl ester and malonic acid dimethyl, amides like acetanilide and acetamide, imides, amines, imidazoles, ureas, carbamates, imines, oximes, mercaptans, sulfites, lactams, etc.

In order to obtain a forced drying type coating material, an unsaturated group should previously be combined with resin "A" or resin "B", and a drier based on metal should be compounded as a catalyst.

The aqueous dispersion type coating material of the present invention can be produced according to the publicly known method by adding to the aforementioned constituents other necessary constituents, for example, other water soluble resin, coated surface adjusting agent, etc. Moreover, in the case that a pigmented aqueous dispersion type coating material is to be produced, it can be manufactured by either of the methods, namely the method of preparing first the pigment paste using a part of resin "A" according to a usual way and then mixing it to the aqueous dispersion of the resin reactant, or the method of previously kneading the pigment into resin reactant and manufacturing an aqueous dispersion of the resin reactant containing a pigment.

The aqueous dispersion type coating material prepared according to the aforesaid method is applied to a coating object in the same manner as the conventional aqueous dispersion type coating materials to form a film through air drying, baking/hardening and forced drying and the like.

The aqueous dispersion type coating material of this invention contains mainly as a film forming constituent the resin reactant of the water soluble epoxy-denatured alkyd resin having an excellent corrosion resistance with a high molecular weight epoxy resin, and hence can form a film having a high corrosion resistance. Further, since the resin reactant can be emulsified in translucent colloidal emulsion region, the dispersion is stable against the addition of organic solvents, and the structural viscosity of the coating material can be controlled, so that the coating material is applicabe to a variety of coating methods.

As described above, the aqueous dispersion type coating material of this invention can form a film having an excellent finished appearance and corrosion resistance by atomization coating as well as immersion coating, flow coating and the like of vertical areas.

Description of Preferred Embodiments

Next, examples of the present invention are to be described in which the expressions of "Parts" and "%" stand for the weight parts and weight %, respectively.

Production Example 1 : Production of Resin "A1".

13.54 parts of lauric acid, 21.76 parts of adipic acid and 36.11 parts of Epikote 828 (in trademark, manufactured by Shell Chemical Corp., hereinafter to be refered to in the same name) were charged into a 4-necked flask equipped with agitator, thermometer, reflux cooler and nitrogen gas inlet, and were heated upto 120°C for 30 minutes. At the point of time when the level of 120°C has been reached, 0.05 part of dimethyl ethanol amine was charged into the mixture and the reaction was continued at 140°C for 2 hours. Next, 4.51 parts of trimellitic anhydride, 7.95 parts of neopnetyl glycol and 6.42 parts of trimethyrol propane were charged into the mixture, heated upto 180°C for 1 hour and the esterification was continued at the same temperature for 2 hours, and thus the reaction product with acid value at 30 was obtained. After cooling down to 120°C, the reaction product was diluted with 9.66 parts of methyl propylene glycol, and the water soluble epoxy-denatured alkyd resin (A1) with epoxy resin content at 40%, lauric acid content at 15%, acid value at 30, hydroxyl value at 180, number average molecular weight at 1,400 and non-volatile matter at 90% was obtained.

Production Example 2 : Production of Resin "A2".

29.99 parts of High Dien (in trademark, manufactured by Sohken Chemical Co., Ltd., unsaturated fatty acid of C18, hereinafter to be referred to in this name), 15.98 parts of adipinic acid and 39.97 parts of Epikote 828 (already stated in the above) were charged into a flask similar to that in Production Example 1, and heated upto 120°C for 30 minutes. When the temperature has been reached to 120°C, 0.05 part of dimethyl ethanol amine was charged into the mixture and the reaction was continued at 140°C for 2 hours. In succession, 5.01 parts of trimellitic anhydride, 0.50 part of neopentyl glycol and 8.50 parts of trimethyrol propane were charged into the mixture, heated upto 180°C for 1 hour and the esterification was continued at the same temperature for 1.5 hours. Thus the water soluble epoxy-denatured alkyd resin (A2) with epoxy resin content at 40%, C18 fatty acid content at 30%, acid value at 30, hydroxyl value at 140, number average molecular weight at 1,750 and non-volatile matter at 100% was obtained.

Production Example 3 : Production of Resin "B1".

27.03 parts of xylene, 63.30 parts of Epikote 1007 (in trademark, manufactured by Shell Chemical Corp., molecular weight at 2,900, epoxy equivalent at 1,850, fusing point at 128°C, hereinafter to be referred to in the same name), and 9.58 parts of High Dien (already stated in the above) were charged into a flask similar to that in Production Example 1, and were heated upto 130°C. After ascertaining that the Epikote 1007 has completely been dissolved, 0.09 parts of diethanol amine was charged into the mixture and the reaction was continued at the same temperature for 2 hours. After the end of reaction, the xylene was removed by vacuum evaporation. Thus the fattic ester epoxy resin (B1) with solid substance at 100%, molecular weight at 3,500 , epoxy equivalent not less than 2,000 and in solid state at an ordinary temperature was obtained.

Example 1.

54.15 parts of water soluble epoxy-denatured alkyd resin (A1), 26.24 parts of Epikote 1007 (already stated in the above) and 8.44 parts of methyl propylene glycol were charged into a flask similar to that in Production Example 1, and were heated upto 130°C. After making sure that the Epikote 1007 has completely been dissolved, 0.04 part of dimethyl ethanol amine was charged into the mixture, the esterification was conducted at the same temperature. The emulsification property of the reactant against water was checked every hour, and in 5 hours later, the resin reactant able to emulsify translucently into water was obtained and the reaction was ended. After cooling down to 110°C, the reactant was added and diluted with 11.13 parts of butyl cellosolve and the resin reactant with acid value at 16, solid substance at 75% and the ratio of resin "A1" /resin "B" (Epikote 1007) being at 65/35 was obtained.

Next, in order to produce a translucent aqueous dispersion from the resin reactant, 53.33 parts of the resin reactant was heated upto 70°C, 0.66 part of demethyl ethanol amine corresponding to 0.65 equivalent of carboxyl group in the resin reactant was added to the reactant for uniform neutralization while agitating with Homo disper (manufactured by Nippon Tokushukika Kogyo Co., Ltd, hereinafter to be referred to in the same name). Then 46.01 parts of deionized water was garadually added to the mixture while maintaining the same temperature level. After the addition of the deionized water, the mixture was cooled down with cold water, and a translucent aqueous dispersion with non-volatile matter at 40% was obtained.

Next, in order to produce a black aqueous dispersion type coating material from the aqueous dispersion, first of all a resin solution of water soluble epoxy-denatured alkyd resin with nonvolatile matter at 35% was obtained which consisted of 38.89 parts of water soluble epoxy-denatured alkyd resin (A1), 1.25 parts of dimethyl ethanol amine and 59.86 parts of deionized water. Then, dispersion was made with a sand mill for 1 hour under the compound ratio of 51.87 parts of the resin solution, 36.32 parts of sedimented barium sulfate, 7.27 parts of carbon black and 4.54 parts of deionized water, and the black paste was prepared. 20.63 parts of this black paste, 74.88 parts of the aqueous dispersion, 3.74 parts of water soluble melamine resin (Cymel #303 in trademark, manufactured by Mitsui Tohatsu Chemical Co., Ltd., hereinafter to be referred to in the same name) as a crosslinking agent, 0.08 part of dimethyl ethanol amine, 0.15 part of paratoluenesulfonic acid, 0.09 part of additive for aqueous coating material (Additole XW329 in trademark, manufactured by Hoechst Corporation, hereinafter to be referred to in the same name) and 0.43 part of deionized water were mixed, and the black aqueous dispersion type coating material with non-volatile matter at 46.5%, the ratio of pigment / resin being at 2.4/10 and the ratio of water soluble epoxy-denatured alkyd resin (A1) / Epikote 1007 being at 70/30 was obtained.

Example 2.

42.94 parts of water soluble epoxy-denatured alkyd resin (A1), 31.62 parts of Epikote 1009 (in trademark, manufactured by Shell Chemical Corp., molecular weight at 3,750, epoxy equivalent at 2,850, melting point at 148°C, hereinafter to be referred to in the same name) and 8.30 parts of methyl propylene glycol were charged into a flask similar to that in Production Example 1 and were heated upto 130°C. After confirming that the Epikote 1009 has completely been dissolved, 0.02 part of dimethyl ethanol amine was charged into the mixture, and the esterification was conducted at the same temperature. The emulsification property of the reactant against water was checked every hour, and in 5 hours later the resin reactant able to emulsify translucently into water was obtained and the reaction was ended. After cooling the resin reactant down to 110°C, 17.12 parts of butyl cellosolve was added to the reactant to dilute, and the resin reactant with the resin acid value at 13, the ratio of resin "A1" / resin "B" being at 55/45 and non-volatile matter at 70% was obtained.

Next, in order to produce a translucent resin dispersion from this resin reactant, 57,14 parts of the resin reactant was heated upto 80°C, 0,54 part of dimethyl ethanol amine corresponding to 0.65 equivalent of carboxyl group in the resin reactant was added to the reactant while agitating with Homo disper for uniform neutralization. Then 42.32 parts of deionized water was gradually added to it while maintaining the same temperature. After the addition of the deionized water, the mixture was cooled down with cold water, and a translucent aqueous dispersion with non-volatile matter at 42% was obtained.

Then, 73.81 parts of the aqueous dispersion, 21.33 parts of black paste prepared in Example 1, 3.87 parts of water soluble melamine resin (already stated in the above), 0.06 part of dimethyl ethanol amine, 0.16 part of paratoluenesulfonic acid, 0.10 part of additive (already stated in the above) for aqueous coating materials and 0.67 part of deionized water were mixed to the mixture, and thus the black aqueous dispersion type coating material with non-volatile matter at 48%, the ratio of pigment / resin being at 2.4/10 and the ratio of water soluble epoxy-denatured alkyd resin (A1) / Epikote 1009 being at 60/40 was obtained.

Example 3.

52 parts of water soluble epoxy-denatured alkyd resin "A2" and 28 parts of solid state fattic ester epoxy resin "B1" were charged into a flask similar to that in Production Example 1, and were heated upto 180°C for the esterification. The emulsification property against water was checked every 30 minutes, and in 90 minutes later the resin reactant able to emulsify translucently into water was obtained and thus the reaction was ended. After cooling down to 130°C, the resin reactant was added and diluted with 20 parts of butyl cellosolve, and the resin reactant with acid value at 17, the ratio of resin "A2" / resin "B1" being at 65/35 and the non-volatile matter at 80% was obtained.

Then, in order to produce a translucent resin dispersion from this resin reactant, 47.5 parts of the resin reactant was heated upto 60°C, and 0.77 part of triethyl amine corresponding to 0.75 equivalent of carboxyl group in the resin reactant was added to the reactant while agitating with Homo disper for uniform neutralization. Then 51.73 parts of deionized water was gradually added to the mixture while maintaining the same temperature level. After the addition of deionized water, the mixture was coolded down with cold water and the translucent aqueous dispersion with non-volatile matter at 38% was obtained.

Next, in order to produce a black aqueous dispersion type coating material from the aqueous dispersion, dispersion was continued with a sand mill for one hour under the compound ratio of 18.24 parts of water soluble epoxy-denatured alkyd resin "A2", 4.56 parts of butyl cellosolve, 0.98 part of triethyl amine, 32.46 parts of deionized water, 36.10 parts of sedimentated barium sulfate and 7.66 parts of carbon black, and a black paste was prepared. Next, 18.27 parts of this black paste, 78.95 parts of the aqueous dispersion, 0.08 part of triethyl amine, 1.31 parts of 2.5% manganese naphthenate aqueous solution, 1.31 part of 2.5% cobalt naphthenate aqueous solution as driers and 0.08 part of additive (already stated in the above) for aqueous coating materials were mixed, and the black aqueous dispersion type coating material of forced drying type with non-volatile matter at 41.3%, the ratio of pigment / resin being at 2.4/10, and the ratio of water soluble epoxy-denatured alkyd resin "A2" / solid state fattic ester epoxy resin being at 70/30 was obtained.

Comparison Example 1.

An aqueous dispersion type coating material in which resin "A1" and resin "B" (Epikote 1007) have not been reacted in esterification has been produced by mixing the water soluble epoxy-denatured alkyd resin "A1" and Epikote 1007 used in Example 1.

That is to say, 69.27 parts of aqueous dispersion with the ratio of resin "A1" / resin "B" (Epikote 1007) being at 65/35, 50% weight average particle size being at 0.3 micro meter and non-volatile matter at 47.5%, 22.34 parts of black paste prepared in Example 1, 4.11 parts of water soluble melamine resin (already stated in the above), 0.17 part of dimethyl ethanol amine, 0.16 part of paratoluenesulfonic acid, 0.10 part of additive (already stated in the above) for aqueous coating materials and 3.85 parts of deionized water were mixed, and the black aqueous dispersion type coating material with non-volatile matter at 51.5%, the ratio of pigment / resin being at 2.4/10 and the ratio of water soluble epoxy-denatured alkyd resin "A1" / Epikote 1007 being at 70/30 was obtained.

Comparison Example 2.

An aqueous dispersion type coating material in which resin "A1" and resin "B" (Epikote 1009) have not been reacted in esterification was produced by mixing the water soluble epoxy-denatured alkyd resin "A1" and Epikote 1009 used in Example 2.

In other words, 71.33 parts of aqueous dispersion with the ratio of resin "A1" / resin "B" (Epikote 1009) being 55/45, 50% weight average particle size at 0.6 micro meter and non-volatile matter at 47.5%, 23.00 parts of black paste prepared in Emxample 1, 4.23 parts of water soluble melamine resin (already stated in the above), 0.14 part of dimethyl ethanol amine, 0.16 part of paratoluenesulfonic acid, 0.10 part of additive (already stated in the above) for aqueous coating materials and 1.04 parts of deionized water were mixed, and the black aqueous dispersion type coating material with non-volatile matter at 53%, the ratio of pigment / resin being at 2.4/10 and the ratio of water soluble epoxy-denatured alkyd resin "A1" / Epikote 1009 being 60/40 was obtained.

Comparison Example 3.

An aqueous dispersion type coating material in which resin "A2" and resin "B1" have not been reacted in esterification was produced by use of the water soluble epoxy-denatured alkyd resin "A2" and solid state fatty acid epoxy ester resin "B1" used in Example 3.

Nemely, 74.65 parts of aqueous dispersion with the ratio of resin "A2" / resin "B1" being at 65/35, 50% weight average particle size being at 0.5 micro meter and non-volatile matter at 45%, 22.19 parts of black paste used in Example 3, 0.08 part of triethyl amine, 1.49 parts of 2.5% manganese naththenate aqueous solution, 1.49 parts of 2.5% cobalt naththenate aqueous solution as driers and 0.10 part of additive (already stated in the above) for aqueous coating materials were mixed and the black aqueous dispersion type coating material of enforced drying type with non-volatile matter at 46.3%, the ratio of pigment / resin being at 2.4/10 and the ratio of water soluble epoxy-denatured alkyd resin "A2" / solid state fatty acid epoxy ester resin "B1" being at 70/30 was obtained.

Experiment Example.

After the butyl cellosolve was added at 20% against the coating material weight to the black coating material prepared in each Example and was diluted with deionized water, while the black coating material prepared in each Comparison Example was diluted with deionized water without adding butyl cellosolve because the coating material may cause a problem of particle aggregation, to adjust the viscosity (20°C) of the coating materials to at 40 seconds by using Fordcup #4. Next, each coating material was immersion-coated respectively onto a degreased cold rolled steel plate, then baked in vertical state at 140°C for 30 minutes after setting the cold rolled steel plate at 20°C for 20 minutes in vertical state. Thus a completed coated film thickness of 20 micro meter in average was obtained. Then the obtained test piece was tested as to the finished appearance, physical property and corrosion resistance of a coated film.

In addition, another cold rolled steel plate which was bent to an L-letter shape and degreased has been immmersion-coated with the aforesaid diluted coating material and placed horizontally for its setting at 20°C for 20 minutes, then baked at 140°C for 30 minutes. Thus a completed film thickness of 20 micro meter on an average was obtained. Then the immersion workability was judged in view of the generated situations of liquid puddles and pinhole of bent portion.

Moreover, the coating material which has been obtained in each Example 1 to 3 and Comparison Exmple 1 to 3 was diluted to adjust the viscosity to 30 seconds (20°C) with deionized water by using Fordcup #4 and air-sprayed onto a degreased cold rolled steel plate so that the dried coated film thickness would be 20 micro meter on an average. After the cold rolled steel plate was placed in vertical state at 20°C for 10 minutes for setting, the setting was continued in vertical state at 60°C for 10 minutes, and the plate was baked at 140°C for 30 minutes. Then the air-spray workability was judged in view of the generated situation of drips and pinhole.

Additionally, the storage stability of each coating material after the storage for one month at room temperature was judged the case that the organic solvents were added to and in the case that the solvents were not added to the coating materials.

The results are shown in the following Table.

| Test items | | Example | | | Comparison Example | | |
|---|---|---|---|---|---|---|---|
| | | 1 | 2 | 3 | 1 | 2 | 3 |
| 60 degree specular gloss | 1) | 99 | 96 | 95 | 95 | 92 | 90 |
| Finished appearance | 2) | ○ | ○ | ○ | △ | △ | △ |
| Pencil hardness | 3) | F | H | H | F | H | H |
| Adhesive property | 4) | 100/100 | 100/100 | 100/100 | 100/100 | 100/100 | 100/100 |
| Impact resistance | 5) | 50 | 50 | 50 | 50 | 50 | 50 |
| Moisture resistance | 6) | ○ | ○ | △ | ○ | ○ | △ |
| Acid resistance | 7) | ○ | ○ | ○ | ○ | ○ | ○ |
| Alkali resistance | 8) | ○ | ○ | △ | ○ | ○ | △ |
| Corrosion resistance | 9) | 2mm | 1.5mm | 5mm | 2mm | 1.5mm | 5mm |
| Immersion workability | 10) | ○ | ○ | ○ | ✗ | ✗ | ✗ |
| Air-spray workability | 11) | ○ | ○ | ○ | ○ | ○ | ○ |
| Storage stability after one month at room temperature 12) | No addition of organic solvents | Favorable | Favorable | Favorable | Favorable | Favorable | Favorable |
| | Addition of organic solvents | Favorable | Favorable | Favorable | Sedimented | Sedimented | Sedimented |

EP 0 346 533 B1

(Notes).

1) According to "Article 6.7 : 60 degree specular gloss" set forth in JIS K5400.

2) Observe the appearance of test piece.

   ◯ : Favorable. △ : There partially exists a collected liquid in the lower area.

3) To comply with "Article 6.14 : Pencil scratching test" of JIS K5400 and with "Article 8.10 : Pencil scratching test method" of JIS D0202. Cut the wooden portion alone of a pencil (Mitsubishi Uni under trademark, manufactured by Mitsubishi Pencil Co., Ltd.), press and abrade its core with an angle of 45 degrees against the coated steel plate surface, and the pencil hardness just before a scar is marked on the coated surface shall be taken as the tested value.

4) To comply with "Article 6.15 : Crosscut adhesion test" of JIS K5400 and "Article 8.12 : Cross cut adhesion test method" of JIS D0202. 11 parallel lines at 1mm equal space shall be drawn orthogonally to each other onto a test piece using a sharp and thin blade (NT Cutter in trademark) so as to create 100 pieces of square of $1mm^2$, to which a cellphane adhesive tape of 24mm width shall be sticked and shall be pulled upward at once, and if no squares should be peeled away, the test result shall be

recorded as 100/100.

5) As per the method in Article 6.13.3B (Impact deformation test) set forth in JIS K5400.

6) The appearance of a coated film shall be observed after leaving it in a moisture cabinet at temperature of $50^{O}C$ and at the humidity of 98% for 120 hours.

○ : Excellent. △ : Good.

7) The appearance of a coated film shall be observed after it has been kept immersed into 10 volume % sulfuric acid aqueous solution at $20^{O}C$ for 8 hours.

○ : Excellent. △ :Good.

8) The appearance of a coated film shall be observed after 0.2ml of 5% NaOH aqueous solution has been dripped onto the test piece and has been left alone at $20^{O}C$ for 4 hours.

○ : Excellent. △ : Good.

9) To comply with Article 7.8 "Salt water spray test" set forth in JIS K5400.

Measure the width of swollen width on one side of the portion which was cut after giving an X-mark cut injury to the test piece using a sharp and thin blade (NT Cutter) and then leaving it alone inside a salt water spray testing unit for 120 hours. However the area of 1cm from the starting and ending points of cut injury

shall be excluded from the object of criteria.

10) Appearance of a coated film in the lower area of bent portion.

◯ : Good.    X : There is a collected liquid or a pinhole.

11) Appearance of a coated film in the lower area of test piece.

◯ : Good.    X : There is a collected liquid or pinhole.

12) The organic solvents shall be added at 20% against the black coating material.

From the abovementioned results, Examples 1 to 3 prove to be excellent in the appearance of the film (60-degree specular gloss, finished appearance), physical property of the coated film (pencil hardness, adhesion property, impact resistance, moisture resistance, acid resistance, alkali resistance), corrosion resistance, immersion workability, air-spray workability and storage stability.

In contrast to this, with regard to Comparison Examples 1 to 3, the viscosity can not be controlled by the addition of organic solvents because the inherently water insoluble constituent has not been condensed and reacted with the water soluble resin. Further the finished appearance and the immersion workability are inferior and the storage stability when organic solvents were added is also inferior because of the sedimentation due to the particle aggregation.

**Claims**

1. An aqueous dispersion-type coating material comprising, as a film-forming constituent, an aqueous dispersion obtainable by emulsifying a resin reactant having an acid value of 10 to 30 in an aqueous medium in the presence of a base, the resin reactant being obtainable by addition polymerisation of resins designated as resin A and resin B, the ratio of A:B being from 80:20 to 20:80 by weight, in which:

   resin A is a water-soluble epoxy-denatured alkyd resin having an acid value at 20 to 50, a hydroxyl value of 100 to 300 and number average molecular weight of 1,000 to 10,000, and containing 30 to 60% by weight of bisphenol-type epoxy resin in the main chain and 10 to 35% by weight of $C_{8-30}$ alkyl side-chains; and

   resin B is an epoxy resin having a molecular weight of 2,000 to 30,000 and an epoxy equivalent of 1,500 or more, and which is in the solid state under normal conditions.

2. A material according to claim 1, in which resin A is derived from a bisphenol-type epoxy resin and a polyester.

3. A material according to claim 2, in which the polyester is derived from a polyol, a multibasic acid constituent, and a material providing the side-chains.

4. A material according to claim 3, in which the side-chain-providing material is selected from monovalent alcohols, fatty esters and aliphatic epoxy compounds.

5. A material according to any preceding claim, in which the resin reactant is dispersable in an aqueous medium as a translucent colloidal emulsion.

14

**Revendications**

1. Matière en dispersion aqueuse d'enrobage comportant comme composant formant le film une dispersion aqueuse obtenue par émulsification d'une résine réactive de valeur acide entre 10 et 30 en milieu aqueux en présence d'une base, la résine réactive étant obtenue suivant la polymérisation en ajoutant les résines d'appellations résine A et résine B, le rapport A : B étant de 80 : 20 à 20 - 80 par poids, dont:

la résine A est une résine époxy alkyde dénaturée soluble à l'eau d'une valeur acide de 20 à 50, d'une valeur hydroxyle de 100 à 300 et d'un poids moléculaire numérique moyen de 1.000 à 10.000, et contenant 30 à 60% par poids de résine époxy bisphénolique en chaîne principale et 10 à 35% par poids d'alkyle $C_{8-30}$ en chaînes latérales; et

la résine B est une résine époxy d'un poids moléculaire de 2.000 à 30.000 et un équivalent époxy de 1.500 ou supérieur, à l'état solide en conditions normales.

2. Matière selon la revendication 1, dont la résine A est dérivée d'une résine époxy bisphénol et d'un polyester.

3. Matière selon la revendication 2, dont le polyester est dérivé d'un polyol, d'un composant acide multibase et d'une matière apportant les chaînes latérales.

4. Matière selon la revendication 3, dont la matière apportant les chaînes latérales est sélectionnée à partir d'alcools monovalents, d'esters gras et de composés époxy aliphatiques.

5. Matière selon l'une ou l'autre des revendications antérieures, dont la résine réactive admet la dispersion en milieu aqueux comme émulsion colloïdale translucide.

**Patentansprüche**

1. Beschichtungsmaterial, basierend auf wässriger Dispersion, welches als einen Film-bildenden Bestandteil eine wässrige Dispersion umfaßt, erhältlich durch Emulgieren eines Harz-Reaktionsteilnehmers mit einem Säurewert von 10 bis 30 in einem Wässrigen Medium in Anwesenheit einer Base, wobei der Harz-Reaktionsteilnehmer durch Additionspolymerisation von Harzen, bezeichnet als Resin A und Resin B in einem Verhältnis von A:B zwischen 80:20 und 20:80 Gew.% erhalten werden kann, worin

Resin A ein wasserlösliches Epoxy-denaturiertes Alkydharz mit einem Säurewert von 20 bis 50, einem Hydroxylwert von 100 bis 300 und einem Zahlendurchschnitt des Molekulargewichts von 1.000 bis 10.000 ist, das 30 bis 60 Gew.% Epoxyharz vom Bisphenol-Typ in der Hauptkette und 10 - 35 Gew.% $C_{8-30}$ Alkyl-Seitenketten enthält; und

Resin B ein Epoxyharz mit einem Molekulargewicht von 2.000 bis 30.000 und einem Epoxyäquivalent von mindestens 1.500 ist und welches unter Normalbedingungen fest ist.

2. Material nach Anspruch 1, worin Resin A sich von einem Epoxyharz vom Bisphenoltyp und einem Polyester ableitet.

3. Material nach Anspruch 2, worin sich das Polyester von einem Polyol, einer mehrbasischen Säure und einem Material, das die Seitenketten bildet, ableitet.

4. Material nach Anspruch 3, worin das Seitenketten-bildende Material ausgewählt wurde aus einwertigen Alkoholen, Fettestern und aliphatischen Epoxy-Verbindungen.

5. Material nach Anspruch 1-4, worin der Harz-Reaktionsteilnehmer in einem wässrigen Medium als eine durchscheinende kolloidale Emulsion dispergierbar ist.